# EUROPEAN PATENT APPLICATION

(11) **EP 2 868 617 A1**
(43) Date of publication of application: **06.05.2015**
(21) Application number: 14188256.3
(22) Date of filing: 09.10.2014
(51) Int. Cl.: B66D 5/24, F16D 65/00, B66D 5/30

(54) **Damping arrangement for damping the opening noise of a machinery brake of an elevator hoisting machine; an elevator hoisting machine, and an elevator**

(30) Priority: 29.10.2013 FI 20136055
(71) Applicant: Kone Corporation, 00330 Helsinki (FI)
(72) Inventor: Olkkonen, Mika, 05830 Hyvinkää (FI); Saarelainen, Antti, 02650 Espoo (FI)

(57) **Abstract**

The damping arrangement (40) for damping the opening noise between the frame part (1) and armature part (2) of a machinery brake (20) of an elevator hoisting machine, said machinery brake being opened with an electromagnet (5, 6, 2), comprises a number of channels (45) machined around a magnetizing coil (5) in the frame part (1) of the machinery brake (20) and channels (42) corresponding to them machined in the armature part (2), into which channels (42, 45) at least one damping element (47, 50, 51) is fixed by means of fixings (43). The machinery brake (20) of an elevator hoisting machine comprises a frame part (1), an armature part (2) that is movable with respect to the frame part (1) and is installed at the end of the air gap (10) from the frame part (1), said armature part being moved by means of an electromagnet (5, 6) that is in the frame part (1) towards the frame part (1) for opening the machinery brake (20) and by means of one or more work springs (4) acting between the frame part (1) and the armature part (2) for closing the machinery brake (20), and a damping arrangement (40) for damping the opening noise between the frame part (1) and armature part (2). Also an independent claim relating to an elevator.

## Description

### Field of the invention

The invention relates particularly to machinery brakes to be used in elevators and to the implementation of said brakes.

### Technical background

In elevator hoisting machines a machinery brake that mechanically connects with a rotating part of the hoisting machine is normally used as a brake device.

Structurally, a machinery brake can be e.g. a drum brake or a disc brake. The machinery brake is activated by disconnecting the current supply of the electromagnet of the brake. The machinery brake usually comprises springs which, when the brake is activated, press an armature part provided with a brake pad against the braking surface of a rotating part to brake the movement of the rotating part of the hoisting machine.

The brake is opened by supplying current to the electromagnet of the brake. The brake opens when the electromagnet pulls the brake pad off the braking surface of the rotating part of the hoisting machine by resisting the thrusting force produced by the springs. During a run, current is connected to the electromagnet, in which case the brake is open and the elevator car can move up or down in the elevator hoistway. The brake implementation of an elevator can be e.g. such that the same hoisting machine comprises two or more machinery brakes.

As the current of the electromagnet decreases, the force exerted by the spring finally exceeds the force of attraction of the electromagnet, and the brake activates. Owing to the imbalance of forces the brake pad strikes against the braking surface of the rotating part of the machine. When the brake opens, the electromagnet again exerts on the armature part a force that is in the opposite direction to the spring force. When the force exerted on the armature part by the electromagnet grows to be greater than the spring force, the air gap between the frame part and the armature part closes, and the armature part strikes against the frame part.

Collision of the metallic parts of a brake against each other when the brake is activated or opened may cause a disturbing noise. The noise problem is eliminated whenever possible by adding e.g. a separate damper to the air gap between the frame part and the armature part, which damper when the brake is open prevents direct contact between the metal surfaces of the frame part and of the armature part. A damper can be made of an elastic material, such as rubber or polyurethane; a damper can also be implemented with a separate spring dimensioned for this purpose, such as with a helical spring or cup spring.

The air gap between the frame part and the armature part can vary e.g. owing to manufacturing tolerances of the damper. The force of attraction of the electromagnet decreases as the air gap increases, in which case opening/keeping open the brake requires more current than before. Generally speaking, power losses in the coil of an electromagnet of a brake increase when the air gap increases. When the power losses increase, the operating temperature of the brake rises.

The damping force achieved by the damper can also decline over the service life of the brake; for example, the damping force of a damper made from polyurethane might gradually decrease owing to the high temperature of the brake. The damping force of a spring, on the other hand, can decrease owing to, *inter alia,* fatigue. When the damping force decreases, the operating capability, i.e. the ability to dampen the noise of the brake, declines.

This type of brake is known e.g. from the preamble of the applicant's international patent application publication WO 2012/152998 A2.

### Purpose of the invention

The first purpose of the invention is to offer an alternative damping arrangement to the arrangement described in patent application WO 2012/152998 A2 for damping the opening noise of an operational brake of an elevator hoisting machine, which alternative damping arrangement can be used instead of, or in addition to, the damping arrangement in question. The second purpose of the invention is to lengthen the service life of an arrangement for damping the opening noise of an operational brake of an elevator hoisting machine.

The first purpose can be resolved by means of an arrangement for damping the opening noise of an operational brake of an elevator hoisting machine, said arrangement being according to independent claim 1 or parallel independent claim 2, by means of an operational brake of an elevator hoisting machine according to parallel independent claim 7, and by means of an elevator according to the second parallel independent claim 8.

The second purpose can be resolved by means of an arrangement for damping the opening noise of an operational brake of an elevator hoisting machine, said arrangement being according to dependent claim 3 or 4, and also correspondingly by means of an operational brake of an elevator hoisting machine and of an elevator that are presented in the preceding paragraph when the damping arrangement that is in them is according to claim 3 or 4.

The dependent claims describe preferred embodiments of the arrangement for damping the opening noise of an operational brake of an elevator hoisting machine and preferred embodiments of an elevator.

### Advantages of the invention

The damping arrangement according to the first aspect of the invention for damping the opening noise between the frame part and the armature part of a machinery brake of an elevator hoisting machine, said machinery brake being opened with an electromagnet, comprises a number of channels machined around a magnetizing coil in the frame part of the machinery brake and channels corresponding to them machined in the armature part, into which channels at least one damping element, more particularly a) a damping spring and/or b) a cup spring, is fixed by means of fixings. According to this embodiment the force adjustment of the damping arrangement can be implemented more easily compared to the alternative damping arrangement presented in the following paragraph. The spatial orientation of the armature part can be better controlled by means of the channels and the damping elements fixed into them. Particularly when using a plate-type armature part (see the reference number 2 used in the drawings), with a damping arrangement implemented according to prior art, the armature part often tries to move one edge first (i.e. unevenly) towards the electromagnet. As a result of the damping arrangement now invented, uneven moving of, in particular, a plate-type armature part towards the electromagnet can be better avoided.

Alternatively, the damping arrangement for damping the opening noise between the frame part and the armature part of a machinery brake of an elevator hoisting machine, said machinery brake being opened with an electromagnet, comprises a number of channels machined around a magnetizing coil in the frame part of the machinery brake, into which channels at least one damping element is fixed by means of fixings, which damping element is situated in the frame part in such a way that the damping element does not extend into the armature part. The implementation costs of this embodiment are smaller than those of the alternative damping arrangement described in the preceding paragraph.

By means of both damping arrangements, damping can be implemented by means of damping elements. This is an advantage when compared to the state of the art because the spring constant of the damping elements remains constant at typical operating temperatures in a typical machinery brake.

Generally elastomer-based materials are used as a damping element for damping brake noise, if the solution described in international patent application publication WO 2012/152998 A2 is not used. When using polyurethane, the hardness of the polyurethane affects the damping force. The inventors know that the hardness obtained from the same material can differ by 5 units on the Shore A hardness scale. In this case the spring properties of a damper element change significantly.

In tests, the materials in current use have proven to be sensitive to temperature. The materials used age quickly at temperatures exceeding 70 C. Other properties known to be dependent on temperature are hardness at a low temperature (hardness causes disturbing brake noise) and thermal expansion (thermal expansion causes brake sagging).

The size of an elastomer-based or polyurethane-based machinery brake must therefore be made rather large so that the expected service life of the machinery brake can be made to be sufficiently long.

When using a damping arrangement according to the first aspect of the invention, the properties of the damping springs are better known. The machinery brake can be used when hotter, in which case its size can be reduced. In addition, the brake noise can be brought to remain constant for the whole service life of the machinery brake.

By using a damping element installed in a channel, tighter temperature-independent magnetic dimensioning of the machinery brake is achieved. At the same time sagging of the machinery brake when hot and disturbing brake noise when cold can be better avoided.

When the damping arrangement additionally comprises at least one work spring of the machinery brake, which spring is configured to keep the damping elements pretensioned, the service life of the damping springs, and simultaneously the service life of the whole damping arrangement, can be increased. With the connection in series according to claim 4 of a damping element and a work spring, the damping can be dimensioned in relation to the differences in spring constant of each work spring in such a way that the damping arrangement acts within the limits of the desired tolerance range sufficiently consistently with all the serially-connected damping elements and work springs (or at least with most of them).

In other words, the damping springs are pretensioned by means of the spring force of the work spring, in which case the damping springs are never unloaded. The solution improves the service life of the damping springs: a spring that is not pretensioned might be destroyed after 30, 000 - 40,000 strokes. When using a solution according to the state of the art, a mechanical damping spring would thus be damaged rather quickly in cyclical loading when releasing the load.

When at least a part of the channels machined into the armature part continue through the armature part as a continuing channel, and wherein a tightening means is installed in the channel continuing in this way for adjusting the pretensioning of the damping springs, the damping force can be adjusted, most preferably for each specific damping element, and in this way the operation of the damping elements can be improved. At the same time it is possible to optimize the operation of the whole damping arrangement. In this way better movement control is achieved for the brake plate or brake drum.

According to a preferred aspect, the damping arrangement can additionally comprise a brake drum fixed to a rotating part of the hoisting machine.

The machinery brake of the elevator hoisting machine according to the second aspect of the invention comprises a frame part, an armature part that is movable with respect to the frame part and is installed at the end of the air gap from the frame part, said armature part being moved by means of an electromagnet that is in the frame part towards the frame part for opening the machinery brake and by means of one or more work springs acting between the frame part and the armature part for closing the machinery brake. In addition, the machinery brake of a hoisting machine of an elevator comprises some damping arrangement according to the first aspect of the invention for damping the opening noise between the frame part and the armature part.

An elevator according to the third aspect of the invention comprises a hoisting machine, comprising at least one rotating part, and also a machinery brake according to the second aspect of the invention, wherein the machinery brake is configured to brake the movement of a rotating part of the hoisting machine.

The damping arrangement operates effectively if the damping arrangement of a machinery brake in an elevator according to the third aspect of the invention is according to the second aspect of the invention and if at least one work spring of the machinery brake is, when the brake is closed, configured to press the armature part against the braking surface on a rotating part of the hoisting machine.

### List of drawings

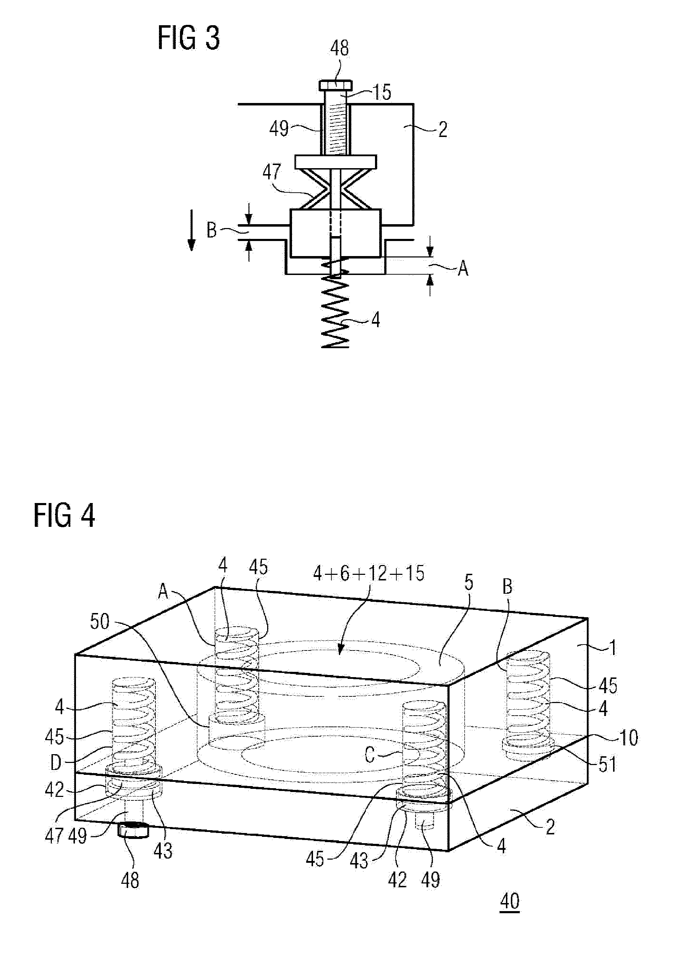

The invention is presented in the following in more detail by the aid of an illustrative embodiment presented in the drawing FIG 4. The drawings present:
- FIG 1: a cross-section I - I of the machinery brake of the elevator hoisting machine presented in drawing FIG 2;
- FIG: a machinery brake of a hoisting machine of an elevator;
- FIG 3: an alternative prior-art arrangement for damping the opening noise of a machinery brake; and
- FIG 4: a damping arrangement according to the invention.

In all the FIGs the same reference numbers refer to the same technical features.

### Detailed description of the invention

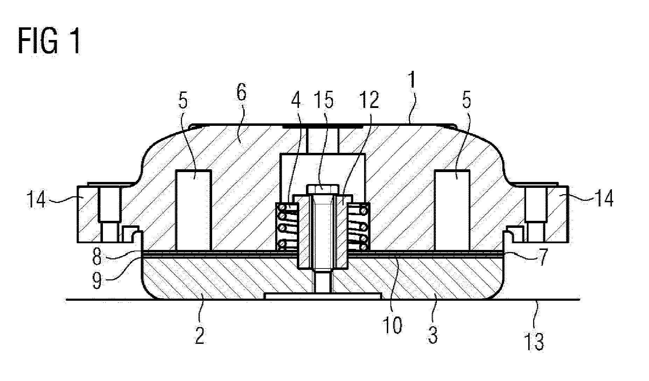

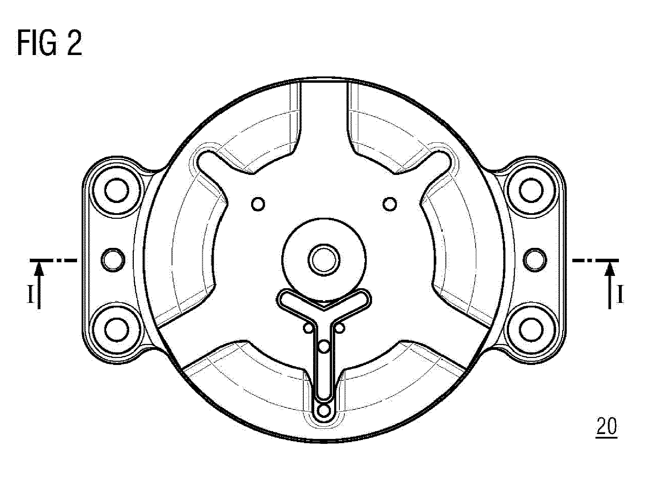

FIG 2 presents a machinery brake 20 of an elevator hoisting machine, said brake being known from the applicant's patent application publication WO 2012/152998 A2. A cross-section I-I of the machinery brake 20 of an elevator hoisting machine is presented in FIG 1.

The frame part 1 of the machinery brake 20 of an elevator hoisting machine is fixed to the stationary machine frame of the hoisting machine with fixing lugs 14. In the frame part 1 is an electromagnet, which comprises a magnetizing coil 5 and also a coil core 6, which is preferably made of iron.

The armature part 2 of the machinery brake 20 is movably supported on the frame part 1 with a bolt 15 and a bushing 12 on the bolt 15 in such a way that the armature part 2 is able to move along its determined trajectory in relation to the frame part 1. The length of the movement of the armature part 2 can be adjusted by moving the bushing 12 along the bolt 15 and in this way the magnitude of the air gap 10 that is between the armature part 2 and the frame part 1 can also be adjusted.

The work spring 4, of which there are a number, exerts a thrusting force between the frame part 1 and the armature part 2 in such a way that the machinery brake 20 is activated to brake the movement of a rotating part of the hoisting machine when the springs 4 press the armature part 2 against the brake drum 13 of the rotating part of the hoisting machine.

The operating range of the work spring 4 is dimensioned in such a way that the thrusting force produced by the work spring 4, or by all the work springs 4 together, is constant in relation to the path of movement of the armature part 2 or the thrusting force changes only a little when the location of the armature part 2 changes.

The machinery brake 20 is opened by supplying current to the magnetizing coil 5 of the electromagnet; the current traveling in the magnetizing coil 5 brings about a force of attraction between the coil core 6 and the magnetic core 3 of the armature part 2 made from magnetizable material, pulling the armature part 2 off the brake drum 13 by resisting the thrusting force of the work spring 4 or work springs 4.

When the machinery brake 20 opens and when the armature part 2 starts to move towards the frame part 1, the force of attraction exerted on the armature part 2 of the electromagnet starts to increase, because the air gap 10 of the magnetic circuit of the machinery brake 20 between the coil core 6 and the magnetic core 3 simultaneously starts to decrease. Owing to the increasing force of attraction, the kinetic energy of the armature part 2 tries to become large, in which case the armature part 2 would noisily 5 strike against the frame part 1 of the machinery brake 20.

For damping noise in machinery brakes 20 according to the state of the art, a damping element which, as in the case presented in FIG 1 and in international patent application publication WO 2012/152998 A2, can be implemented as a damping plate 7, or as in the case presented in FIG 3, by means of a damping spring 4 arranged below the armature part 2.

FIG 4 presents a first embodiment of the damping arrangement 40, according to the invention, of a machinery brake 20 of an elevator. There is not necessarily any need for the damping arrangement 40 according to the invention to have a damping plate 7 (compare FIG 1), but instead it can be omitted.

The damping arrangement 40 is implemented by machining a number of channels 45 around a magnetizing coil 5 in the frame part 1 of the machinery brake 20 of the elevator hoisting machine. The coil core 6, bushing 12 and bolt 15 are, as before, inside the magnetizing coil 5.

A work spring 4 and one or more damping elements, e.g. a damping spring 47, additional damper 50 an additional damper and/or a cup spring 51, are disposed in each channel 45.

According to a first embodiment a channel 42, which continues as a narrower channel 49 to below the armature part 2, corresponding to each channel 45 can be machined also in the armature part 2. According to a second embodiment at least one damping element (see above) is fixed into the channels 45 by means of fixings 43, which damping element is situated in the frame part 1 in such a way that the damping spring does not extend into the armature part 2.

FIG 4 comprises the implementation options A, B, C and D that can be used in connection with both embodiments of our invention.

### Implementation option A:

At the end of a work spring 4 fixed into a channel 45, preferably at the bottom, is a hard elastomer-based or polyurethane-based additional damper 50.

### Implementation option B:

At the end of a work spring 4 fixed into a channel 45, preferably at the bottom, is a cup spring 51.

The implementation options A and B are implemented most preferably without a guide. Implementation options A and B would not necessarily work. We have also invented what we consider to be the better implementation options C and D:

### Implementation option C:

A guide pin 49 is arranged inside a work spring 4 fixed into a channel 45. The guide pin 49 is supported by, surrounded by, or fixed by means of, a fixing 43 into a channel 42 made in the armature part 2. The fixing 43 can comprise an additional damper 51 or can be an additional damper 51.

At the end of the work spring 4 is a damping spring 47 (e.g. bundle of cup springs).

In this way we can better compensate different opening behavior, caused by the tolerance of the work springs 4, at points of the armature part 2.

### Implementation option D:

A guide pin 49 is arranged inside a work spring 4 fixed into a channel 45. The guide pin 49 travels along a channel made in the armature part 2. The tightening bolt 48 of the guide pin 49 most preferably comes through the armature part 2. The guide pin 49 is supported by, surrounded by, or fixed by means of, a fixing 43 into a channel 42 made in the armature part 2. The fixing 43 can comprise an additional damper or can be an additional damper.

A damping spring 47 is fixed in a channel 45, 42 by means of the respective fixings 43 in both the frame part 1 and the armature part 2. By means of the fixings 43, the pretensioning of the damping springs 47 can be adjusted by tightening or loosening the tightening bolt 48.

In summary, for all the implementation options A - D, compared to the solution described by international patent application publication WO 2012/152998 A2, the damping elements of the machinery brake 20 are now therefore implemented as integrated work spring packs.

We can implement a damping arrangement 40 by using any whatsoever of the implementation options A - D according to the first or second embodiment, or a combination of any of these. In this case the number of channel 45-damping spring combinations comprised in a damping arrangement 40 can be selected to be that needed. The number needed can be viably selected to be any whatsoever between two and approx. ten.

The invention is not limited to the damping elements according to implementation options A D presented above. Damping springs 47, additional dampers 50 or cup springs 51 can be used as damping elements in all the different implementations, more particularly therefore also in implementation option D.

The invention must not be regarded as being limited only to the claims below but instead should be understood to include all legal equivalents of said claims and combinations of the embodiments presented.

### List of reference numbers used:

- 1: frame part
- 2: armature part
- 3: magnetic core
- 4: work spring
- 5: magnetizing coil
- 6: coil core
- 7: damping plate
- 8: countersurface of coil core, on air gap 10 side
- 9: countersurface of magnetic core 3 of armature part, on air gap 10 side
- 10: air gap
- 12: bushing
- 13: brake drum
- 14: fixing lug
- 15: bolt
- 20: machinery brake
- 39: damping spring
- 40: damping arrangement
- 42: channel
- 43: fixing
- 45: channel
- 47: damping spring (e.g. bundle of cup springs)
- 48: tightening bolt
- 49: guide pin
- 50: additional damper
- 51: cup spring

## Claims

1. Damping arrangement (40) for damping the opening noise between the frame part (1) and armature part (2) of a machinery brake (20) of an elevator hoisting machine, said machinery brake being opened with an electromagnet (5, 6, 2), **characterized in that** the damping arrangement (40) comprises a number of channels (45) machined around a magnetizing coil (5) in the frame part (1) of the machinery brake (20) and channels (42) corresponding to them machined in the armature part (2), into which channels (42, 45) at least one damping element (47, 50, 51), more particularly a) a damping spring and/or b) a cup spring, is fixed by means of fixings (43)

2. Damping arrangement (40) for damping the opening noise between the frame part (1) and armature part (2) of a machinery brake (20) of an elevator hoisting machine, said machinery brake being opened with an electromagnet (5, 6, 2), **characterized in that** the damping arrangement (40) comprises a number of channels (45) machined around a magnetizing coil (5) in the frame part (1) of the machinery brake (20), into which channels (45) at least one damping element (47, 50, 51) is fixed by means of fixings (43), which damping element is situated in the frame part (1) in such a way that the damping element does not extend into the armature part (2).

3. Damping arrangement (40) according to claim 1 or 2, which additionally comprises at least one work spring (4) of the machinery brake (20), which spring is configured to keep the damping elements (47, 50, 51) pretensioned.

4. Damping arrangement (40) according to claim 3, wherein at least one damping element (47, 50, 51) is fitted into the same channel (45, 52) as the work spring (4), or into a channel consecutive to said channel (45, 52), in such a way that the damping element (47, 50, 51) and the work spring (4) are in series with each other.

5. Damping arrangement (40) according to claim 1 or to claims 1 and 3 or to claims 1 and 4, wherein at least a part of the channels (42) machined into the armature part (2) continue through the armature part (2) as a continuing channel (49), and wherein a tightening means (48) is installed in the channel (49) continuing in this way for adjusting the pretensioning of the damping element (47, 50, 51).

6. Damping arrangement (40) according to any of claims 1 - 5, which additionally comprises a brake drum (13) fixed to a rotating part of the hoisting machine.

7. Machinery brake (20) of an elevator hoisting machine, **characterized in that** the machinery brake (20) comprises:
- a frame part (1);
- an armature part (2) that is movable with respect to the frame part (1) and is installed at the end of the air gap (10) from the frame part (1), said armature part being moved by means of an electromagnet (5, 6) that is in the frame part (1) towards the frame part (1) for opening the machinery brake (20) and by means of one or more work springs (4) acting between the frame part (1) and the armature part (2) for closing the machinery brake (20); and
- damping arrangement (40) according to any of claims 1 - 6 for damping the opening noise between the frame part (1) and armature part (2).

8. Elevator, which comprises a hoisting machine, comprising at least one rotating part, and also a machinery brake (20) according to claim 7, wherein the machinery brake (20) is configured to brake the movement of a rotating part of the hoisting machine.

9. Elevator according to claim 8, wherein the damping arrangement (40) of the machinery brake (20) is according to claim 6, and at least one work spring (4) of which arrangement is, when the brake is closed, configured to press the armature part (2) against the braking surface on a rotating part of the hoisting machine.
